# EUROPEAN PATENT SPECIFICATION

(11) **EP 4 631 002 B1**
(45) Date of publication and mention of the grant of the patent: **11.11.2026**
(21) Application number: 23825400.7
(22) Date of filing: 08.12.2023
(51) Int. Cl.: G06T 5/00

(54) **PATCH-BASED IMAGE AUGMENTATION FOR NEURAL NETWORKS**
PATCH-BASIERTE BILDVERSTÄRKUNG FÜR NEURONALE NETZWERKE
AUGMENTATION D'IMAGE BASÉE SUR DES MORCEAUX POUR RÉSEAUX NEURONAUX

(30) Priority: 09.12.2022 US 202263431350 P
(43) Date of publication of application: 15.10.2025
(73) Proprietor: Koninklijke Philips N.V., 5656 AE Eindhoven (NL)
(72) Inventor: AL KHALIL, Yasmina, 5656 AG Eindhoven (NL); WEESE, Rolf Jürgen, 5656 AG Eindhoven (NL); LORENZ, Cristian, 5656 AG Eindhoven (NL); BREEUWER, Marcel, 5656AG Eindhoven (NL)
(74) Representative: Philips Intellectual Property & Standards
(86) International application number: PCT/EP2023/084873
(87) International publication number: WO 2024/121377

(56) References cited:
- KIM YOUMIN ET AL: "Local Augment: Utilizing Local Bias Property of Convolutional Neural Networks for Data Augmentation", IEEE ACCESS, IEEE, USA, vol. 9, 11 January 2021 (2021-01-11), pages 15191 - 15199, XP011832873, DOI: 10.1109/ACCESS.2021.3050758
- CUBUK EKIN D ET AL: "AutoAugment: Learning Augmentation Strategies From Data", 2019 IEEE/CVF CONFERENCE ON COMPUTER VISION AND PATTERN RECOGNITION (CVPR), IEEE, 15 June 2019 (2019-06-15), pages 113 - 123, XP033686405, DOI: 10.1109/CVPR.2019.00020
- SHIQI LIN ET AL: "Local Patch AutoAugment with Multi-Agent Collaboration", ARXIV.ORG, CORNELL UNIVERSITY LIBRARY, 201 OLIN LIBRARY CORNELL UNIVERSITY ITHACA, NY 14853, 18 October 2021 (2021-10-18), XP091065524
- TEERATH KUMAR ET AL: "Advanced Data Augmentation Approaches: A Comprehensive Survey and Future directions", ARXIV.ORG, CORNELL UNIVERSITY LIBRARY, 201 OLIN LIBRARY CORNELL UNIVERSITY ITHACA, NY 14853, 2 March 2023 (2023-03-02), XP091449859

## Description

### TECHNICAL FIELD

Embodiments generally relate to computing technology. More particularly, embodiments relate to patch-based image augmentation for neural networks.

### BACKGROUND

Today, neural networks are state-of-the-art for a wide class of medical image analysis tasks such as segmentation, detection or classification. A typical problem with neural networks is their performance, e.g. in terms of segmentation or classification accuracy, when applied to medical images, e.g. magnetic resonance (MR) or computed tomography (CT) images, that have been acquired with slightly varying scanner protocols, MR systems with different field strength or imaging systems from different vendors than the image data used for training, etc.. In particular, it can be observed that the performance degrades in such cases. Attempts to address this problem via augmentation techniques have been used where the style of the images is modified using histogram transformations, filtering, GANs, etc. Yet even when current augmentation techniques are used, the performance of neural network-based image analysis algorithms such as segmentation drops when applied, for instance, to images acquired with systems from other vendors.

Reference is made here to KIM YOU MIN ET AL: "Local Augment: Utilizing Local Bias Property of Convolutional Neural Networks for Data Augmentation", IEEE ACCESS, IEEE, USA, vol. 9, 11 January 2021, pages 15191-15199. This document discloses a data augmentation method in which local patches in an image are selected and different types of augmentation strategies are applied to each local patch.

Furthermore, reference is made to CUBUK EKIN D ET AL: "AutoAugment: Learning Augmentation Strategies From Data",2019 IEEE/CVF CONFERENCE ON COMPUTER VISION AND PATTERN RECOGNITION (CVPR), IEEE, 15 June 2019, pages 113-123.

### SUMMARY

There is, therefore, a need to improve image augmentation for training and inference applications. An object of the disclosed technology is solved by the subject-matter of the appended independent claims, wherein further embodiments are incorporated in the dependent claims, in the accompanying drawings and the following description.

Disclosed herein are improved computing systems, methods, and computer readable media to provide patch-based image augmentation for neural networks. In accordance with one or more embodiments, a computer-implemented method comprises the steps specified in the appended independent method claim.

Preferred embodiments of the computer-implemented system are subject of the appended dependent method claims.

In accordance with one or more embodiments, a computing system comprises the features specified in the appended independent system claim.

Preferred embodiments of the computer-implemented system are subject of the dependent computing system claims.

### BRIEF DESCRIPTION OF THE DRAWINGS

The various advantages of the embodiments will become apparent to one skilled in the art by reading the following specification and appended claims, and by referencing the following drawings, in which:
FIG. 1A provides a block diagram illustrating an example patch-based image augmentation system according to one or more embodiments;
FIG. 1B provides a diagram illustrating an example of image blocks for use in one or more embodiments;
FIG. 2 provides a diagram illustrating an example process of dividing image blocks into image patches according to one or more embodiments;
FIGs. 3A-3B provide diagrams illustrating an example process of generating augmented image blocks according to one or more embodiments;
FIG. 4 provides a diagram illustrating an example of an augmentation generator according to one or more embodiments;
FIGs. 5A-5B provide flow diagrams illustrating an example method of patch-based image augmentation for use in image analysis according to one or more embodiments;
FIG. 6 provides a block diagram illustrating an example patch-based image augmentation training system according to one or more embodiments;
FIG. 7 provides a flow diagram illustrating an example method of patch-based image augmentation training according to one or more embodiments; and
FIG. 8 is a diagram illustrating an example of a computing system for use in a patch-based image augmentation system according to one or more embodiments.

### DESCRIPTION OF EMBODIMENTS

Disclosed herein are improved computing systems, methods, and computer readable media to provide patch-based image augmentation for neural networks. As described herein, in embodiments the technology operates to divide an image block into a plurality of image patches, each image patch having a size, a shape, and a location relative to the image block, generate an augmented image block by applying a variable image augmentation to each image patch, where at least two augmented image patches have different augmentation, and perform an image analysis task by applying a neural network to the augmented image block. In embodiments the technology operates to divide each image block of a plurality of image blocks into a plurality of image patches, each image patch having a size, a shape, and a location relative to the respective image block, generate a plurality of augmented image blocks by applying, for each image block, a variable image augmentation to each image patch, where for at least one augmented image block at least two augmented image patches have different augmentation, and training a neural network using the plurality of augmented image blocks as training images. The technology helps improve the overall performance of neural network-based image analysis by providing for enhanced performance of image analysis tasks such as segmentation, detection or classification, while reducing variance based on differences in sourcing of images used for training and/or images to be processed using a trained system.

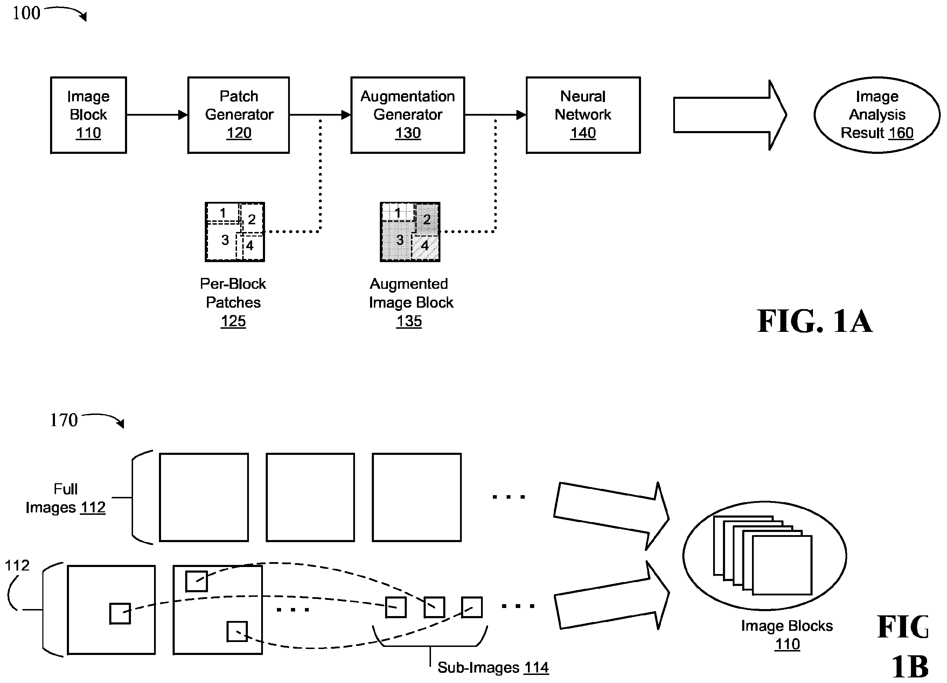

FIG. 1A provides a block diagram illustrating an example patch-based image augmentation system 100 according to one or more embodiments, with reference to components and features described herein including but not limited to the figures and associated description. As shown in FIG. 1A, the system 100 receives and processes an image block 110. As described herein (and as illustrated in FIG. 1B), an image block such as the image block 110 refers to a full image and/or a sub-image of a full image. An image can include, for example, an image as generated by a diagnostic or other medical imaging system such as, e.g., an MR image, a CT image, an X-Ray, and/or an image obtained via other imaging techniques (such as, e.g., ultrasound), or an image as generated by an imaging sensor such as, e.g., a visible or infrared image, etc. Images (and image blocks) can be of varying dimensions, including, e.g., two-dimensional (2D) or three-dimensional (3D) images. As further shown in FIG. 1, the system 100 includes a patch generator 120, an augmentation generator 130, and a neural network 140. The system 100 produces an image analysis result 160. It will be understood that, in some embodiments, the system 100 can include additional, alternate or fewer components than those shown in FIG. 1A, and that, in some embodiments, some components may be combined with or incorporated within other components.

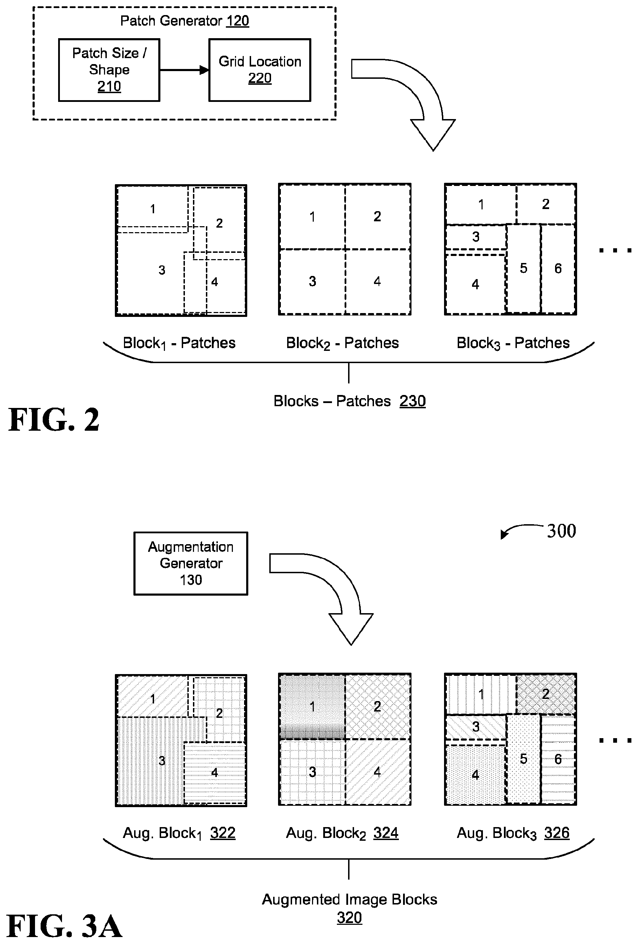

The patch generator 120 takes an image block (e.g., the image block 110) and divides the image block into a plurality of smaller units called patches, such as per-block image patches 125. Each image patch has a size, a shape, and a location relative to the image block 110. Further details regarding generating image patches via the patch generator 120 are provided herein with reference to FIG. 2.

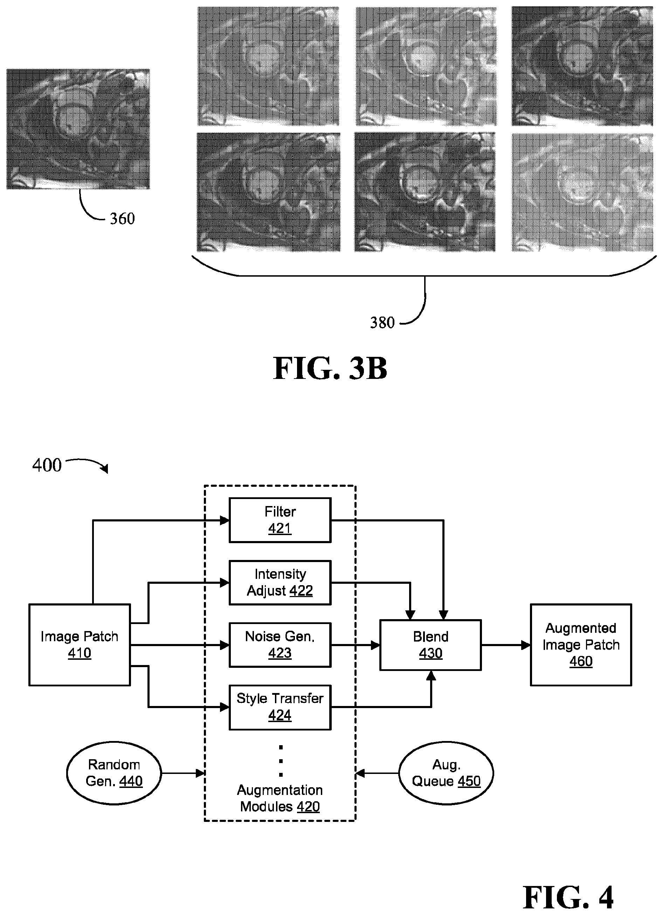

The augmentation generator 130 operates on the image patches 125 produced by the patch generator 120 from the image block 110 to generate an augmented image block 135. The augmentation generator 130 operates by applying a variable image augmentation to each image patch, where at least two augmented image patches (of the plurality of image patches for the image block) have different augmentation. Further details regarding generating augmented image blocks via the augmentation generator 130 are provided herein with reference to FIGs. 3A-3B and 4.

The augmented image block 135 is provided as input to the neural network 140, which operates to perform an image analysis task such as, e.g., classification, detection, segmentation, etc. That is, the neural network 140 is used for inference/evaluation of images. The neural network 140 is trained to perform the type of image analysis task (e.g., classification, detection, segmentation, etc.). In some embodiments the output of the neural network 140 provides the output image analysis result 160 of the system 100. In some embodiments the output of the neural network undergoes further processing to produce the image analysis result 160.

In some embodiments, a given image block 110 is input into the system 100 multiple times to produce a plurality of augmented images blocks 135, where each augmented image block 135 has a unique combination of augmented image patches with respect to the other augmented image blocks. That is, each augmented image block has at least one augmented image patch that is different (in at least one aspect) from the augmented image patches in the other augmented image blocks, and can have two, several, many or all image patches that are different from the augmented image patches in the other augmented image blocks. Each respective augmented image block 135 is run through the neural network 140 to produce outputs of the neural network 140 (e.g., one output for each augmented image block). In some embodiments the original image block 110 is also input into the neural network 140 to produce an additional output of the neural network 140. For example, the augmentation process as described above is applied as processing step to the image block 110 (image block I₀) a number of times and a number of augmented image blocks I₁, ..., Iₙ is generated. These augmented image blocks I₁, ..., Iₙ are each processed by the neural network 140 to produce outputs L₁, ..., Lₙ. In some embodiments the image block I₀ (unaugmented) is also processed by the neural network 140 to produce output L₀. The respective outputs of the neural network 140 (e.g., L₀, ..., Lₙ, or L₁, ..., Lₙ) are then combined (e.g., "fused") to produce the image analysis result 160.

In embodiments, the respective outputs are combined according to one or more combination (e.g., fusion) techniques. In embodiments, such combination techniques can include, for example, averaging, weighted averaging, majority vote, weighted vote, etc. For example, if the image analysis task is classification (e.g., binary classification), each respective output of the neural network 140 can be a probability map with values between [0,1]. The respective outputs of the neural network 140 (binary classification) can be combined in several ways. As one example (binary classification), each of the respective outputs is combined to produce an average value, and then a threshold can be applied to the average value to produce a binary decision. The binary decision becomes the image analysis result 160 based on the averaged outputs. As another example (binary classification), for each respective output, a threshold can be applied to produce a binary decision, and then a majority vote based on these binary decisions is taken to determine the image analysis result 160. As another example (binary classification), for each respective output, a threshold can be applied to produce a binary decision for that respective output. A weight is assigned to each binary decision that depends, for example, on the distance between the respective output and the threshold, and then a weighted majority vote (based on the assigned weights) is taken to determine the image analysis result 160. A predetermined result can be defined to be applied in case of equal votes.

Other ways of combining respective outputs of the neural network 140 can be used and can depend, for example, on the type of image analysis task involved. For example, if the image analysis task is segmentation, each respective output can be a pixel-by-pixel (or voxel-by-voxel) value (e.g., 0 or 1, 0, 1or 2, etc.) representing whether the corresponding pixel (or voxel) in the image represents background, a first object, a second object, etc. As one example, combining segmentation output results can include performing a majority vote or a weighted majority vote on a pixel-by-pixel (or voxel-by-voxel) basis. As another example, if the image analysis task is detection, the respective outputs can be combined by performing an average or a weighted average.

In some embodiments, depending on the type of augmentation used and the type of image analysis task performed, before combining respective outputs the augmentation may need to be reversed. For example, if mirroring is used as an augmentation component and the neural network output provides results on a pixel or voxel basis, the portion corresponding to the image patch to which mirroring was applied would need to be "de-mirrored" to reverse the mirroring. In some embodiments, if the augmentation is a transformation the augmentation is reversed by applying an inverse transform to the portion corresponding to the image patch that was transformed.

Some or all components in the system 100 can be implemented using one or more of a central processing unit (CPU), a graphics processing unit (GPU), an artificial intelligence (AI) accelerator, a field programmable gate array (FPGA) accelerator, an application specific integrated circuit (ASIC), and/or via a processor with software, or in a combination of a processor with software and an FPGA or ASIC. More particularly, components of the system 100 can be implemented in one or more modules as a set of program or logic instructions stored in a machine- or computer-readable storage medium such as random access memory (RAM), read only memory (ROM), programmable ROM (PROM), firmware, flash memory, etc., in hardware, or any combination thereof. For example, hardware implementations can include configurable logic, fixed-functionality logic, or any combination thereof. Examples of configurable logic include suitably configured programmable logic arrays (PLAs), FPGAs, complex programmable logic devices (CPLDs), and general purpose microprocessors. Examples of fixed-functionality logic include suitably configured ASICs, combinational logic circuits, and sequential logic circuits. The configurable or fixed-functionality logic can be implemented with complementary metal oxide semiconductor (CMOS) logic circuits, transistor-transistor logic (TTL) logic circuits, or other circuits.

For example, computer program code to carry out operations by the system 100 can be written in any combination of one or more programming languages, including an object oriented programming language such as JAVA, SMALLTALK, C++ or the like and conventional procedural programming languages, such as the "C" programming language or similar programming languages. Additionally, program or logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

FIG. 1B provides a diagram 170 illustrating an example of image blocks for use in one or more embodiments, with reference to components and features described herein including but not limited to the figures and associated description. A set of full images 112 can be grouped together as a set of image blocks 110. In some embodiments, the image blocks 110 may be obtained from a collection of training images. In some embodiments, one or more sub-images 114 are obtained from the set of full images 112. As an example, a sub-image 114 can be obtained by extracting a portion (e.g., sample or slice) of a full image 112. In some examples, a plurality of sub-images 114 can be extracted from a full image 112, as shown in FIG. 1B. The set of sub-images 114 can be grouped together as a set of image blocks 110. Thus, as illustrated in FIG. 1B the set of image blocks 110 can be full images or sub-images extracted from the full images. In either case, one or more of the image blocks 110 can be used as an input to the system 100.

FIG. 2 provides a diagram illustrating an example process 200 of dividing image blocks into image patches according to one or more embodiments, with reference to components and features described herein including but not limited to the figures and associated description. The process 200 operates (e.g., via the patch generator 120) on one or more image blocks 110. For each image block, the process 200 divides the image block into a set of patches, where each patch has a size, a shape, and a location relative to the image block. For example, the process 200 determines, for each patch, a patch size/shape 210 and a grid location 220. Typically the patch size/shape 210 and/or the grid location 220 will have variations from patch-to-patch and/or block-to-block. A patch size can be determined based on one or more factors such as the number of patches in the block, a threshold amount (e.g., percentage) of the image block collectively represented by the image patches for that block, etc., and the patch size can vary among the patches in the image block. A patch shape can be selected from one or more shapes such as a square, a rectangle, etc., and the patch shape can vary among the patches in the image block. A grid location 220 for an image patch provides a location within the image block for the patch, and can be determined based on one or more factors such as such as the number of patches in the block, a threshold amount (e.g., percentage) of the image block collectively represented by the image patches for that block, etc. In some embodiments, the images patches for a given image block can overlap.

In some embodiments, one or more of the patch size, patch shape and/or patch location, and/or one or more factors used to determine patch size, patch shape and/or patch location, can be selected based on random variation(s) - e.g., via a random process or randomized variable. Thus, as one example, for each image block the number of image patches for that block is determined based on a randomized variable (which can, in embodiments, be bounded by a maximum number of patches per block and a minimum number of patches per block). As another example, for a given image block the shape of each image patch can be selected at random.

Examples of resulting blocks as divided into patches are shown in FIG. 2 as blocks-patches 230. As illustrated in FIG. 2, a first block (block₁) has four patches labeled 1, 2, 3 and 4. The patches 1-4 all vary in size and shape, and have some overlap between adjacent patches. A small portion of block₁ has no corresponding patch, illustrating that blocks can have corresponding patches that represent less than all of the block. Where there is no corresponding patch, the augmented block will use the data from the original image block without augmentation for such portion(s). A second block (block₂) has four patches labeled 1, 2, 3 and 4, which are each of a similar size and shape, with no overlap, and represent approximately 100% of the block₂. A third block (block₃) has six patches labeled 1, 2, 3, 4, 5 and 6, which are of varying sizes and shapes. As exemplified by the patches shown in FIG. 2 generated by the process 200, an essentially unlimited number of variations for patch size, shape, location can be generated by the patch generator 120.

The process 200 can generally be implemented in the patch generator 120 (FIG. 1, already discussed). More particularly, the process 200 and/or functions performed by the patch generator 120 can be implemented as one or more modules as a set of logic instructions stored in a machine- or computer-readable storage medium such as RAM, ROM, PROM, firmware, flash memory, etc., in hardware, or any combination thereof. For example, hardware implementations can include configurable logic, fixed-functionality logic, or any combination thereof. Examples of configurable logic include suitably configured PLAs, FPGAs, CPLDs, and general purpose microprocessors. Examples of fixed-functionality logic include suitably configured ASICs, combinational logic circuits, and sequential logic circuits. The configurable or fixed-functionality logic can be implemented with CMOS logic circuits, TTL logic circuits, or other circuits.

For example, computer program code to carry out the process 200 and/or functions associated with the patch generator 120 can be written in any combination of one or more programming languages, including an object oriented programming language such as JAVA, SMALLTALK, C++ or the like and conventional procedural programming languages, such as the "C" programming language or similar programming languages. Additionally, program or logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

FIG. 3A provides a diagram illustrating an example process 300 of generating augmented image blocks according to one or more embodiments, with reference to components and features described herein including but not limited to the figures and associated description. The process 300 operates (e.g., via the augmentation generator 130) on image patches generated by the patch generator 120. For each image block, the process 300 takes the patches for that block and augments each patch using variable image augmentation. For example, the variable image augmentation employed by the process 300 can include one or more of the following augmentation selections (e.g., types of augmentation): filtering; intensity adjustment; added noise (e.g., via a noise generator); style transfer, etc., and there can be one or more parameters associated with any selection. For a given image patch, the variable image augmentation can include one or more of these selections, and when more than one type of augmentation is selected for the image patch the augmentations can be blended for the image patch. Typically the augmentation will vary from patch-to-patch, although in some embodiments some patches will have the same augmentation. In any event, at least one augmented image block will have at least two patches with different augmentation. In some embodiments, one or more augmentation selections and/or parameters associated therewith can be selected based on random variation(s) - e.g., via a random process or randomized variable. For example, the number of augmentations applied to a given image patch can be selected based on a randomized variable. As another example, the selected augmentation for a given image patch can be selected at random.

Examples of resulting augmentation blocks based on applying augmentation to image blocks as divided into image patches are shown in FIG. 3A as augmented image blocks 320. As illustrated in FIG. 3A, a first augmented block 322 (block₁) has four augmented patches labeled 1-4 (which correspond to the four patches for block₁ shown in FIG. 2). The four patches for block₁ have different augmentations (as illustrated by the different hashings for each image patch shown in the figure). A second augmented block 324 (block₂) has four augmented patches labeled 1-4 (which correspond to the four patches for block₂ shown in FIG. 2). The four patches for block₂ have different augmentations (as illustrated by the different hashings or shadings for each image patch shown in the figure). A third augmented block 326 (block₃) has six augmented patches labeled 1-6 (which correspond to the six patches for block₃ shown in FIG. 2). The six patches for block₃ have different augmentations (as illustrated by the different hashings or shadings for each image patch shown in the figure). Further details regarding variable image augmentation are provided herein with reference to FIG. 4. In some embodiments, a geometric transformation can be applied to the entire image block either before or after applying patch-wise augmentations to the patches of the image block.

The process 300 can generally be implemented in the augmentation generator 130 (FIG. 1, already discussed). More particularly, the process 300 and/or functions performed by the augmentation generator 130 can be implemented as one or more modules as a set of logic instructions stored in a machine- or computer-readable storage medium such as RAM, ROM, PROM, firmware, flash memory, etc., in hardware, or any combination thereof. For example, hardware implementations can include configurable logic, fixed-functionality logic, or any combination thereof. Examples of configurable logic include suitably configured PLAs, FPGAs, CPLDs, and general purpose microprocessors. Examples of fixed-functionality logic include suitably configured ASICs, combinational logic circuits, and sequential logic circuits. The configurable or fixed-functionality logic can be implemented with CMOS logic circuits, TTL logic circuits, or other circuits.

For example, computer program code to carry out the process 300 and/or functions associated with the augmentation generator 130 can be written in any combination of one or more programming languages, including an object oriented programming language such as JAVA, SMALLTALK, C++ or the like and conventional procedural programming languages, such as the "C" programming language or similar programming languages. Additionally, program or logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

FIG. 3B provides a diagram illustrating examples of augmented blocks 380 generated from an image block 360. The six augmented blocks 380 were generated using a variable augmentation patch-wise process (similar to the process 200 and the process 300) in which patch locations were randomly selected on a grid, patch sizes were randomly selected from a number of patch sizes, and a random amount of noise was added and/or a gamma transformation (contrast and brightness adjustments) with random parameters was applied as augmentation to the patches.

FIG. 4 provides a diagram illustrating an example of an augmentation generator 400 for generating augmented image blocks according to one or more embodiments, with reference to components and features described herein including but not limited to the figures and associated description. The augmentation generator 400, which corresponds in embodiments to the augmentation generator 130 (FIGs. 1A and 3A), operates on one or more image patch(es) 410 generated by the patch generator 120 (FIGs. 1A and 2) to apply (e.g., provide) variable image augmentation to the image patch(es) 410. The augmentation generator 400 carries out the process 300 and includes one or more augmentation modules 420 for selecting various types of image augmentation, such as, e.g., a filter module 421, an intensity adjustment module 422, a noise generator module 423, a style transfer module 424, etc. In some embodiments other augmentation modules (not shown in FIG. 4) can provide different / additional types of image augmentation.

When selected, the filter module 421 applies a filtering operation to the image patch 410. The filtering operation can include any type of image filtering operation, including lowpass filtering, bandpass filtering, high-pass filtering, edge filtering, Gaussian filtering, gradient filtering, etc. The type and/or characteristics of the applied filtering operation can be based on associated parameters (e.g., selectable). In embodiments, when the filter module 421 is the only selected augmentation for the given image patch 410, the output of the module becomes the augmented image patch 460.

When selected, the intensity adjustment module 422 applies a transformation to the image patch 410 to produce an adjustment to the image intensity. Examples of intensity-adjusting transformations include one or more of a histogram transformation, a gamma transformation, a linear contrast/brightness transformation, etc. The type and/or characteristics of the applied intensity transformation can be based on associated parameters (e.g., selectable). In embodiments, when the intensity adjustment module 422 is the only selected augmentation for the given image patch 410, the output of the module becomes the augmented image patch 460.

When selected, the noise generator module 423 applies a noise component to the image patch 410, which can be performed in an additive or other manner. The noise component can include any type of noise, e.g., Gaussian noise, white noise, etc. The type and/or characteristics of the applied noise component can be based on associated parameters (e.g., selectable). In embodiments, when the noise generator module 423 is the only selected augmentation for the given image patch 410, the output of the module becomes the augmented image patch 460.

When selected, the style transfer module 424 applies a transformation to the image patch 410 to produce a transfer in style, e.g., via a generative adversarial network (GAN) or similar neural network. The type and/or characteristics of the style transfer can be based on associated parameters (e.g., selectable). In embodiments, when the style transfer module 424 is the only selected augmentation for the given image patch 410, the output of the module becomes the augmented image patch 460.

In embodiments, more than one type of augmentation is selected and applied to the image patch 410. In such cases, the output of each augmentation module 420 is provided as an input to a blend module 430 to combine the augmentations using a blend operation, and the output of the blend module 430 becomes the augmented image patch 460. The blend operation can be any type of suitable blending operation (e.g., on a pixel-by-pixel basis), such as, e.g., providing an average of the inputs, a weighted average of the inputs, etc.

As previously described, the augmentation is typically varied from one image patch to the next to provide variable image augmentation. That is, typically the augmentation will vary from patch-to-patch, although in some embodiments some patches will have the same augmentation. In any event, for variable image augmentation at least one augmented image block will have at least two patches with different augmentation. Different augmentations can be applied by various approaches. As one example, different augmentations can be obtained by varying the type of augmentation applied (e.g., by selecting different augmentation modules from one image patch to the next). As another example, different augmentations can be obtained by varying the parameters for a particular type of augmentation (e.g., applying different filters one image patch to the next). As another example, different augmentations can be obtained by varying one or more of the type of augmentation and/or the parameters for a particular type of augmentation from one image patch to the next.

In some embodiments, the selection of an augmentation (e.g., augmentation type and/or associated parameter for the augmentation type) is performed on a random basis. A random generator 440 (e.g., a random number or random variable generator) can be used to select, on a random basis, one or more of the augmentation modules 420 and/or one or more parameters associated with an augmentation module 420. As one example, the random generator 440 can be used for providing a randomized module/parameter selection for each image patch 410. As another example, the random generator 440 can be used for providing a list (e.g., string) of randomized module/parameter selections, each respective selection for a different image patch 410.

In some embodiments, the selection of an augmentation (e.g., augmentation type and/or associated parameter for the augmentation type) is performed based on an augmentation queue 450. For example, a predetermined queue (e.g., a list or table) of varying augmentation types and/or associated parameters can be generated or designed. Each entry in the queue can include single and/or multiple augmentation types to be applied to a given image patch. For a given image patch, an augmentation (type(s) and/or parameters) as provided in a queue entry is applied to the image patch, with the output provided as the augmented image patch 460 or, in the case of multiple augmentation types, the outputs are provided to the blend module 430 for blending and then output from the blend module 430 as the augmented image patch 460. For the next image patch, the next queue entry provides the type of augmentation for that patch, and so on until each entry in the queue has been used.

In some embodiments, additional augmentation can be performed on an image block (e.g., applied to the entire image block before dividing into image patches and augmenting the patches) and/or an augmented image block is generated (e.g., applied to the entire augmented image block after patch-based augmentation). For example, a spatial transformation such as, e.g., a non-rigid transformation (e.g., image warp or shape change), mirroring, rotating, translation, scaling, affine/elastic transforms, etc. can be applied to the image block and/or to the augmented image block. The type and/or characteristics of the spatial transformation can be based on associated parameters (e.g., selectable). Other augmentation(s) can be selectively applied to an image block and/or an augmented image block in a like manner.

Some or all components in the augmentation generator 400 can be implemented using one or more of a CPU, a GPU, an AI accelerator, an FPGA accelerator, an ASIC, and/or via a processor with software, or in a combination of a processor with software and an FPGA or ASIC. More particularly, the augmentation generator 400 and/or functions performed by the augmentation generator 400 can be implemented as one or more modules as a set of logic instructions stored in a machine- or computer-readable storage medium such as RAM, ROM, PROM, firmware, flash memory, etc., in hardware, or any combination thereof. For example, hardware implementations can include configurable logic, fixed-functionality logic, or any combination thereof. Examples of configurable logic include suitably configured PLAs, FPGAs, CPLDs, and general purpose microprocessors. Examples of fixed-functionality logic include suitably configured ASICs, combinational logic circuits, and sequential logic circuits. The configurable or fixed-functionality logic can be implemented with CMOS logic circuits, TTL logic circuits, or other circuits.

For example, computer program code to carry out functions performed by the augmentation generator 400 can be written in any combination of one or more programming languages, including an object oriented programming language such as JAVA, SMALLTALK, C++ or the like and conventional procedural programming languages, such as the "C" programming language or similar programming languages. Additionally, program or logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

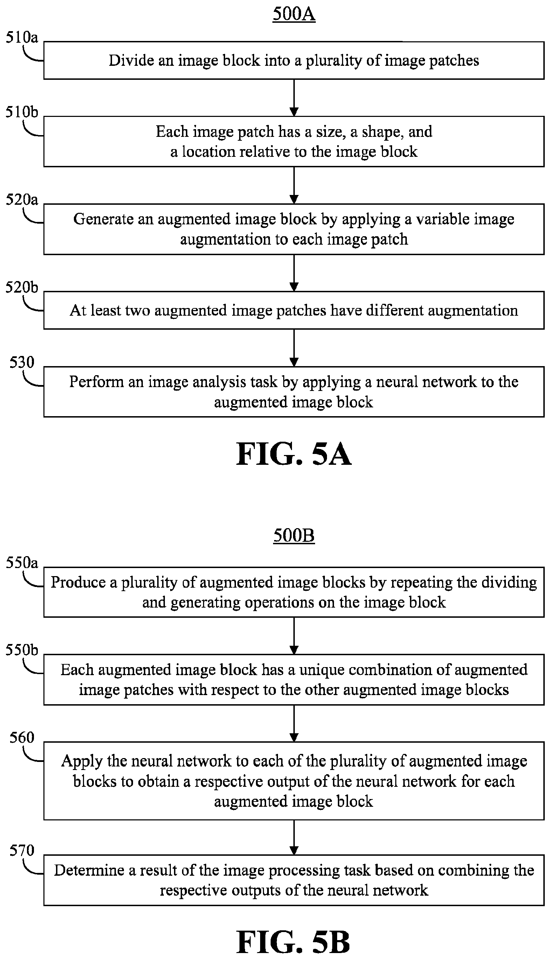

FIGs. 5A-5B provide flow diagrams illustrating an example method 500 (including process components 500A and 500B) of patch-based image augmentation for use in image analysis according to one or more embodiments, with reference to components and features described herein including but not limited to the figures and associated description. The method 500 can generally be implemented in the system 100 (FIG. 1, already discussed) and/or via components thereof. More particularly, the method 500 can be implemented as one or more modules as a set of logic instructions stored in a machine- or computer-readable storage medium such as RAM, ROM, PROM, firmware, flash memory, etc., in hardware, or any combination thereof. For example, hardware implementations can include configurable logic, fixed-functionality logic, or any combination thereof. Examples of configurable logic include suitably configured PLAs, FPGAs, CPLDs, and general purpose microprocessors. Examples of fixed-functionality logic include suitably configured ASICs, combinational logic circuits, and sequential logic circuits. The configurable or fixed-functionality logic can be implemented with CMOS logic circuits, TTL logic circuits, or other circuits.

For example, computer program code to carry out operations shown in the method 500 and/or functions associated therewith can be written in any combination of one or more programming languages, including an object oriented programming language such as JAVA, SMALLTALK, C++ or the like and conventional procedural programming languages, such as the "C" programming language or similar programming languages. Additionally, program or logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

Turning to FIG. 5A, the method 500A begins at illustrated processing block 510a by dividing an image block into a plurality of image patches, where at illustrated processing block 510b each image patch has a size, a shape, and a location relative to the image block. Illustrated processing block 520a provides for generating an augmented image block by applying a variable image augmentation to each image patch, where at illustrated processing block 520b at least two augmented image patches have different augmentation. Illustrated processing block 530 provides for performing an image analysis task by applying a neural network to the augmented image block. In embodiments the image analysis task is one of classification, detection or segmentation.

In some embodiments, for each image patch of the plurality of image patches, one or more of the size, the shape or the location of a respective of image patch is selected on a random basis. In some embodiments, the image patches collectively represent at least a threshold amount of the image block. In some embodiments, at least two image patches overlap within an image block, and overlapping regions of the at least two image patches, as augmented, are blended together. In some embodiments, the neural network is trained using a plurality of augmented training image blocks produced from a plurality of training image blocks, where for at least one augmented training image block at least two augmented image patches have different augmentation.

In embodiments, variable image augmentation includes selection of one or more augmentation components, where an augmentation component can have one or more parameters to further define (or refine) the augmentation component, or aspect(s) or feature(s) thereof, to be applied to a respective image patch. In some embodiments, the variable image augmentation comprises at least one augmentation component selected from a plurality of augmentation components. In some embodiments, the plurality of augmentation components includes one or more of a filter, an intensity adjustment, a noise generator, or a style transfer. In some embodiments, for each image patch of the plurality of image patches, the at least one augmentation component is selected on a random basis. In some embodiments, for each image patch of the plurality of image patches, a parameter associated with the at least one augmentation component is selected on a random basis. In some embodiments, for each image patch of the plurality of image patches, the at least one augmentation component is selected based on a predetermined queue. In some embodiments, for each image patch having a plurality of selected augmentation components, outputs for each of the selected augmentation components are blended to provide an augmented image patch.

Turning now to FIG. 5B, the method 500B provides for, at illustrated processing block 550a, producing a plurality of augmented image blocks by repeating the dividing and generating operations on the image block, where at illustrated processing block 550b each augmented image block has a unique combination of augmented image patches with respect to the other augmented image blocks. Performing the image analysis task (FIG. 5A, processing block 530) includes, at illustrated processing block 560, applying the neural network to each of the plurality of augmented image blocks to obtain a respective output of the neural network for each augmented image block and, at illustrated processing block 570, determining a result of the image processing task based on combining the respective outputs of the neural network. In some embodiments the original image block is also input into the neural network to produce an additional output of the neural network, which is then combined in like manner with the other outputs. In some embodiments, combining the respective outputs of the neural network include using to one or more combination (e.g., fusion) techniques. In embodiments, such combination techniques can include, for example, averaging, weighted averaging, majority vote, weighted vote, etc.

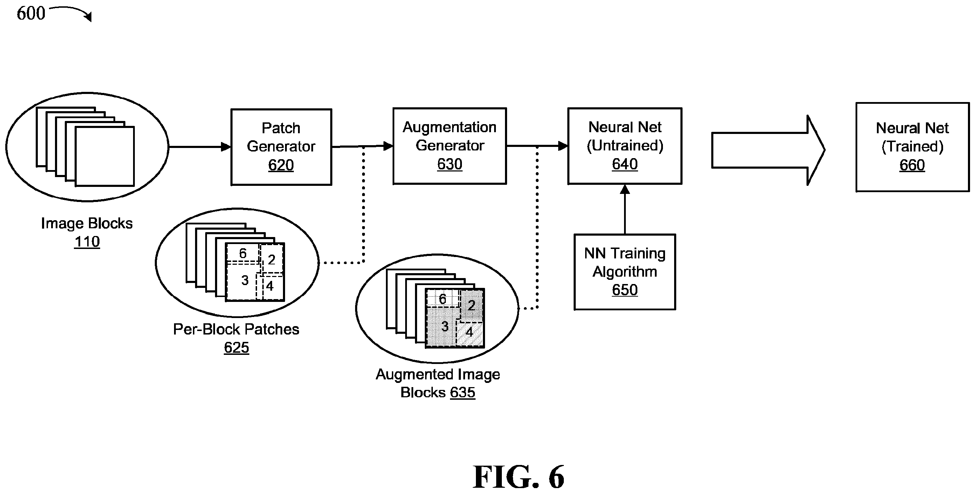

FIG. 6 provides a block diagram illustrating an example patch-based image augmentation training system 600 according to one or more embodiments, with reference to components and features described herein including but not limited to the figures and associated description. Certain components, aspects and operation of the system 600 correspond to or are similar to components, aspects and operation of the system 100 (FIG. 1, already discussed) and, thus, some details will not be repeated except as necessary or appropriate to understand the system 600. As shown in FIG. 6, the system 600 receives and processes a plurality of image blocks 110. As described herein (and as illustrated in FIG. 1B), an image block such as the image block 110 refers to a full image and/or a sub-image of a full image. An image can include, for example, an image as generated by a diagnostic or other medical imaging system such as, e.g., an MR image, a CT image, an X-Ray, and/or an image obtained via other imaging techniques (such as, e.g., ultrasound), or an image as generated by an imaging sensor such as, e.g., a visible or infrared image, etc. Images (and image blocks) can be of varying dimensions, including, e.g., two-dimensional (2D) or three-dimensional (3D) images. The image blocks 110 can be selected for use as potential training images (e.g., once augmented as described herein) to train the neural network 640.

As further shown in FIG. 6, the system 600 includes a patch generator 620, an augmentation generator 630, and a neural network 640, where the neural network 640 is untrained. The system 600 uses a neural network training algorithm 650 to train the neural network 640 and produce a trained neural network 660. It will be understood that, in some embodiments, the system 100 can include additional, alternate or fewer components than those shown in FIG. 1A, and that, in some embodiments, some components may be combined with or incorporated within other components.

The patch generator 620 operates on the image blocks 110 and generates, for each input image block 110, per-block image patches 625. In embodiments, the patch generator 620 corresponds to the patch generator 120 (FIGs. 1A and 2, already discussed). In embodiments, the per-block image patches 625 corresponds to the per-block image patches 125 (FIG. 1A, already discussed) and/or to the blocks-patches 230 (FIG. 2, already discussed).

The augmentation generator 630 applies variable augmentation to the per-block image patches 625 for each image block 110 that is input to the system 600, and generates a plurality of augmented image blocks 635, thus, e.g., producing an augmented image block 635 for each input image block 110. In embodiments, the augmentation generator 630 corresponds to the augmentation generator 130 (FIGs. 1A, and 3A, already discussed) and/or to the augmentation generator 400 (FIG. 4, already discussed). In embodiments, each augmented image block 635 corresponds to the augmented image block 135 (FIG. 1A, already discussed). In embodiments, the augmented image blocks 635 correspond to the augmented image blocks 320 (FIG. 3A, already discussed).

The augmented image blocks 635 are used as training images and are input to the untrained neural network 640. A neural network training algorithm 650 is used to train the neural network 640 based on the augmented image blocks 635. The neural network training algorithm 650 can include any neural network training algorithm suitable for training a neural network to perform a given image analysis task such as, e.g., classification, detection, segmentation, etc. Once the training process is performed, the result is a trained neural network 660. The trained neural network 660 can be used for performing the appropriate image analysis task for which it has been trained (e.g., classification, detection, segmentation, etc.) on other image blocks (not shown in FIG. 6). For example, the trained neural network 660 can be substituted for the neural network 140 (FIG. 1A, already discussed).

In some embodiments, where neural network training involves patches of a particular size, the patch generator 120 can have patch sizes selectable to avoid using the same patch size for augmentation as the particular patch size for training. In some embodiments, random patch sizes are used by the patch generator 120 as an alternative to avoiding a particular patch size from training.

Some or all components in the system 600 can be implemented using one or more of a CPU, a GPU, an AI accelerator, an FPGA accelerator, an ASIC, and/or via a processor with software, or in a combination of a processor with software and an FPGA or ASIC. More particularly, components of the system 600 can be implemented in one or more modules as a set of program or logic instructions stored in a machine- or computer-readable storage medium such as RAM, ROM, PROM, firmware, flash memory, etc., in hardware, or any combination thereof. For example, hardware implementations can include configurable logic, fixed-functionality logic, or any combination thereof. Examples of configurable logic include suitably configured PLAs, FPGAs, CPLDs, and general purpose microprocessors. Examples of fixed-functionality logic include suitably configured ASICs, combinational logic circuits, and sequential logic circuits. The configurable or fixed-functionality logic can be implemented with CMOS logic circuits, TTL logic circuits, or other circuits.

For example, computer program code to carry out operations by the system 600 can be written in any combination of one or more programming languages, including an object oriented programming language such as JAVA, SMALLTALK, C++ or the like and conventional procedural programming languages, such as the "C" programming language or similar programming languages. Additionally, program or logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

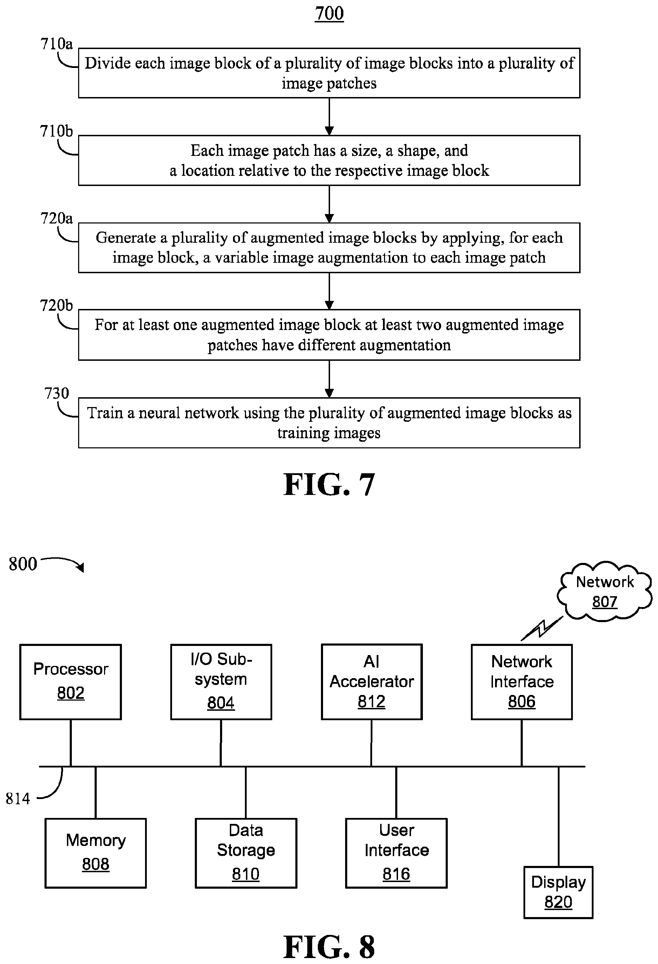

FIG. 7 provides a flow diagram illustrating an example method 700 of patch-based image augmentation training for use in training a neural network according to one or more embodiments, with reference to components and features described herein including but not limited to the figures and associated description. The method 700 can generally be implemented in the system 600 (FIG. 6, already discussed) and/or via components thereof. More particularly, the method 700 can be implemented as one or more modules as a set of logic instructions stored in a machine- or computer-readable storage medium such as RAM, ROM, PROM, firmware, flash memory, etc., in hardware, or any combination thereof. For example, hardware implementations can include configurable logic, fixed-functionality logic, or any combination thereof. Examples of configurable logic include suitably configured PLAs, FPGAs, CPLDs, and general purpose microprocessors. Examples of fixed-functionality logic include suitably configured ASICs, combinational logic circuits, and sequential logic circuits. The configurable or fixed-functionality logic can be implemented with CMOS logic circuits, TTL logic circuits, or other circuits.

For example, computer program code to carry out operations shown in the method 700 and/or functions associated therewith can be written in any combination of one or more programming languages, including an object oriented programming language such as JAVA, SMALLTALK, C++ or the like and conventional procedural programming languages, such as the "C" programming language or similar programming languages. Additionally, program or logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

Illustrated processing block 710a provides for dividing each image block of a plurality of image blocks into a plurality of image patches, where at illustrated processing block 710b each image patch has a size, a shape, and a location relative to the respective image block. Illustrated processing block 720a provides for generating a plurality of augmented image blocks by applying, for each image block, a variable image augmentation to each image patch of the image block, where at illustrated processing block 720b, for at least one augmented image block, at least two augmented image patches have different augmentation. Illustrated processing block 730 provides for training a neural network using the plurality of augmented image blocks as training images.

In some embodiments, for each image patch of the plurality of image patches, one or more of the size, the shape or the location of a respective of image patch is selected on a random basis. In some embodiments, for each image block the image patches for that image block collectively represent at least a threshold amount of the image block. In some embodiments, at least two image patches overlap within an image block, and overlapping regions of the at least two image patches, as augmented, are blended together.

In embodiments, variable image augmentation includes selection of one or more augmentation components, where an augmentation component can have one or more parameters to further define (or refine) the augmentation component, or aspect(s) or feature(s) thereof, to be applied to a respective image patch. In some embodiments, the variable image augmentation comprises at least one augmentation component selected from a plurality of augmentation components. In some embodiments, the plurality of augmentation components includes one or more of a filter, an intensity adjustment, a noise generator, or a style transfer. In some embodiments, for each image patch of the plurality of image patches, the at least one augmentation component is selected on a random basis. In some embodiments, for each image patch of the plurality of image patches, a parameter associated with the at least one augmentation component is selected on a random basis. In some embodiments, for each image patch of the plurality of image patches, the at least one augmentation component is selected based on a predetermined queue. In some embodiments, for each image patch having a plurality of selected augmentation components, outputs for each of the selected augmentation components are blended to provide an augmented image patch.

It will be understood that the method 700 can be performed in several ways. As one example, the operations of the method 700 can be performed in a serial fashion, where a first image block is divided into a plurality of image patches, a first augmented image block is generated by applying a variable image augmentation to each image patch for the first image block, and the first augmented image block is used in training the neural network. The process can then be repeated for a second image block, and a third image block, etc. in a serial manner. For example, these tasks can be performed in a serial manner in real time (e.g., the augmentation applied to image patches in an image block "on the fly" during training). As another example the operations of the method 700 can be performed in a batch fashion, where each of a plurality of image blocks is divided into a plurality of image patches, and a set of augmented image blocks is generated by applying a variable image augmentation to each image patch for the plurality of image blocks, and then the set of augmented image blocks is stored and used to train the neural network. As another example, the operations of the method 700 can be performed in a mixed serial-batch fashion, where some aspects are performed in a serial manner and other operations are performed in a batch manner. For example, the augmented image blocks can be generated in serial fashion (each based on a respective input image block) and then stored; once all augmented image blocks are generated, the set of augmented image blocks are then used to train the neural network.

FIG. 8 is a diagram illustrating a computing system 800 for use in the system 100 and/or in the system 600 according to one or more embodiments, with reference to components and features described herein including but not limited to the figures and associated description. Although FIG. 8 illustrates certain components, the computing system 800 can include additional or multiple components connected in various ways. It is understood that not all examples will necessarily include every component shown in FIG. 8. As illustrated in FIG. 8, the computing system 800 includes one or more processors 802, an I/O subsystem 804, a network interface 806, a memory 808, a data storage 810, an artificial intelligence (AI) accelerator 812, a user interface 816, and/or a display 820. These components are coupled, connected or otherwise in data communication via an interconnect 814. In some embodiments, the computing system 800 interfaces with a separate display. The computing system 800 can implement one or more components or features of the system 100, the system 600, and/or any of the components, features or methods described herein with reference to FIGs. 1A, 1B, 2, 3A, 3B, 4, 5A, 5B, 6 and/or 7.

The processor 802 includes one or more processing devices such as a microprocessor, a central processing unit (CPU), a fixed application-specific integrated circuit (ASIC) processor, a reduced instruction set computing (RISC) processor, a complex instruction set computing (CISC) processor, a field-programmable gate array (FPGA), a digital signal processor (DSP), etc., along with associated circuitry, logic, and/or interfaces. The processor 802 can include, or be connected to, a memory (such as, e.g., the memory 808) storing executable instructions and/or data, as necessary or appropriate. The processor 802 can execute such instructions to implement, control, operate or interface with any components or features of the system 100, the system 600, and/or any of the components, features or methods described herein with reference to FIGs. 1A, 1B, 2, 3A, 3B, 4, 5A, 5B, 6 and/or 7. The processor 802 can communicate, send, or receive messages, requests, notifications, data, etc. to/from other devices. The processor 802 can be embodied as any type of processor capable of performing the functions described herein. For example, the processor 802 can be embodied as a single or multi-core processor(s), a digital signal processor, a microcontroller, or other processor or processing/controlling circuit. The processor can include embedded instructions (e.g., processor code).

The I/O subsystem 804 includes circuitry and/or components suitable to facilitate input/output operations with the processor 802, the memory 808, and other components of the computing system 800.

The network interface 806 includes suitable logic, circuitry, and/or interfaces that transmits and receives data over one or more communication networks using one or more communication network protocols. The network interface 806 can operate under the control of the processor 802, and can transmit/receive various requests and messages to/from one or more other devices. The network interface 806 can include wired or wireless data communication capability; these capabilities can support data communication with a wired or wireless communication network, such as the network 807, and further including the Internet, a wide area network (WAN), a local area network (LAN), a wireless personal area network, a wide body area network, a cellular network, a telephone network, any other wired or wireless network for transmitting and receiving a data signal, or any combination thereof (including, e.g., a Wi-Fi network or corporate LAN). The network interface 806 can support communication via a short-range wireless communication field, such as Bluetooth, NFC, or RFID. Examples of network interface 806 include, but are not limited to, one or more of an antenna, a radio frequency transceiver, a wireless transceiver, a Bluetooth transceiver, an ethernet port, a universal serial bus (USB) port, or any other device configured to transmit and receive data.

The memory 808 includes suitable logic, circuitry, and/or interfaces to store executable instructions and/or data, as necessary or appropriate, when executed, to implement, control, operate or interface with any components or features of the system 100, the system 600, and/or any of the components, features or methods described herein with reference to FIGs. 1A, 1B, 2, 3A, 3B, 4, 5A, 5B, 6 and/or 7. The memory 808 can be embodied as any type of volatile or non-volatile memory or data storage capable of performing the functions described herein, and can include a random-access memory (RAM), a read-only memory (ROM), write-once read-multiple memory (e.g., EEPROM), a removable storage drive, a hard disk drive (HDD), a flash memory, a solid-state memory, and the like, and including any combination thereof. In operation, the memory 808 can store various data and software used during operation of the computing system 800 such as operating systems, applications, programs, libraries, and drivers. Thus, the memory 808 can include at least one non-transitory computer readable medium comprising instructions which, when executed by the computing system 800, cause the computing system 800 to perform operations to carry out one or more functions or features of the system 100, the system 600, and/or any of the components, features or methods described herein with reference to FIGs. 1A, 1B, 2, 3A, 3B, 4, 5A, 5B, 6 and/or 7. The memory 808 can be communicatively coupled to the processor 802 directly or via the I/O subsystem 804.

The data storage 810 can include any type of device or devices configured for short-term or long-term storage of data such as, for example, memory devices and circuits, memory cards, hard disk drives, solid-state drives, non-volatile flash memory, or other data storage devices. The data storage 810 can include or be configured as a database, such as a relational or non-relational database, or a combination of more than one database. In some examples, a database or other data storage can be physically separate and/or remote from the computing system 800, and/or can be located in another computing device, a database server, on a cloud-based platform, or in any storage device that is in data communication with the computing system 800.

The artificial intelligence (AI) accelerator 812 includes suitable logic, circuitry, and/or interfaces to accelerate artificial intelligence applications, such as, e.g., artificial neural networks, machine vision and machine learning applications, including through parallel processing techniques. In one or more examples, the AI accelerator 812 can include a graphics processing unit (GPU). The AI accelerator 812 can implement one or more components or features of the system 100, the system 600, and/or components, features or methods described herein with reference to FIGs. 1A, 1B, 2, 3A, 3B, 4, 5A, 5B, 6 and/or 7, including one or more of the neural network 140 (FIG. 1A) and/or the neural network 640 and/or the neural network 660 (FIG. 6). In some examples the computing system 800 includes a second AI accelerator (not shown).

The interconnect 814 includes any one or more separate physical buses, point to point connections, or both connected by appropriate bridges, adapters, or controllers. The interconnect 814 can include, for example, a system bus, a Peripheral Component Interconnect (PCI) bus, a HyperTransport or industry standard architecture bus, a small computer system interface (SCSI) bus, a universal serial bus (USB), IIC (I2C) bus, or an Institute of Electrical and Electronics Engineers (IEEE) standard 694 bus (e.g., "Firewire"), or any other interconnect suitable for coupling or connecting the components of the computing system 800.

The user interface 816 includes code to present, on a display, information or screens for a user and to receive input (including commands) from a user via an input device. The display 820 can be any type of device for presenting visual information, such as a computer monitor, a flat panel display, or a mobile device screen, and can include a liquid crystal display (LCD), a light-emitting diode (LED) display, a plasma panel, or a cathode ray tube display, etc. The display 820 can include a display interface for communicating with the display. In some examples, the display 820 can include a display interface for communicating with a display external to the computing system 800.

In some examples, one or more of the illustrative components of the computing system 800 can be incorporated (in whole or in part) within, or otherwise form a portion of, another component. For example, the memory 808, or portions thereof, can be incorporated within the processor 802. As another example, the user interface 816 can be incorporated within the processor 802 and/or code in the memory 808. In some examples, the computing system 800 can be embodied as, without limitation, a mobile computing device, a smartphone, a wearable computing device, an Internet-of- Things device, a laptop computer, a tablet computer, a notebook computer, a computer, a workstation, a server, a multiprocessor system, and/or a consumer electronic device. In some examples, the computing system 800, or portion thereof, is implemented in one or more modules as a set of logic instructions stored in at least one non-transitory machine- or computer-readable storage medium such as random access memory (RAM), read only memory (ROM), programmable ROM (PROM), firmware, flash memory, etc., in configurable logic such as, for example, programmable logic arrays (PLAs), field programmable gate arrays (FPGAs), complex programmable logic devices (CPLDs), in fixed-functionality logic hardware using circuit technology such as, for example, application specific integrated circuit (ASIC), complementary metal oxide semiconductor (CMOS) or transistor-transistor logic (TTL) technology, or any combination thereof.

Embodiments of each of the above systems, devices, components, features and/or methods, including the system 100, the process 200, the process 300, the augmentation generator 400, the method 500, the system 600, the method 700, and/or any other system components, can be implemented in hardware, software, or any suitable combination thereof. For example, hardware implementations can include configurable logic, fixed-functionality logic, or any combination thereof. Examples of configurable logic include suitably configured PLAs, FPGAs, CPLDs, and general purpose microprocessors. Examples of fixed-functionality logic include suitably configured ASICs, combinational logic circuits, and sequential logic circuits. The configurable or fixed-functionality logic can be implemented with CMOS logic circuits, TTL logic circuits, or other circuits.

Alternatively, or additionally, all or portions of the foregoing systems, devices, components, features and/or methods can be implemented in one or more modules as a set of program or logic instructions stored in a machine- or computer-readable storage medium such as RAM, ROM, PROM, firmware, flash memory, etc., to be executed by a processor or computing device. For example, computer program code to carry out the operations of the components can be written in any combination of one or more operating system (OS) applicable/appropriate programming languages, including an object-oriented programming language such as PYTHON, PERL, JAVA, SMALLTALK, C++, C# or the like and conventional procedural programming languages, such as the "C" programming language or similar programming languages.

Embodiments are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the platform within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections, including logical connections via intermediate components (e.g., device A may be coupled to device C via device B). In addition, the terms "first", "second", etc. may be used herein only to facilitate discussion, and carry no particular temporal or chronological significance unless otherwise indicated.

As used in this application and in the claims, a list of items joined by the term "one or more of" may mean any combination of the listed terms. For example, the phrases "one or more of A, B or C" may mean A, B, C; A and B; A and C; B and C; or A, B and C.

Those skilled in the art will appreciate from the foregoing description that the broad techniques of the embodiments can be implemented in a variety of forms. Therefore, while the embodiments have been described in connection with particular examples thereof, the true scope of the embodiments should not be so limited since other modifications will become apparent to the skilled practitioner upon a study of the drawings, specification, and following claims.

## Claims

1. A computer-implemented method (700) comprising:
dividing an image block into a plurality of image patches, each image patch having a size, a shape, and a location relative to the image block;
generating an augmented image block by applying a variable image augmentation to each image patch, wherein the variable image augmentation comprises at least one augmentation component selected from a plurality of augmentation components and at least two augmented image patches have different augmentation, wherein for each image patch having a plurality of selected augmentation components, outputs for each of the selected augmentation components are blended to provide an augmented image patch; and
training a neural network using the plurality of augmented image blocks as training images.

2. The method of claim 1, further comprising:
producing a plurality of augmented image blocks by repeating the dividing and generating operations on the image block, wherein each augmented image block has a unique combination of augmented image patches with respect to the other augmented image blocks;
performing an image analysis task including:
applying the neural network to each of the plurality of augmented image blocks to obtain a respective output of the neural network for each augmented image block; and
determining a result of the image processing task based on combining the respective outputs of the neural network.

3. The method of claim 1, wherein for each image patch of the plurality of image patches, one or more of the size, the shape or the location of a respective of image patch is selected on a random basis.

4. The method of claim 1, wherein the image patches collectively represent at least a threshold amount of the image block.

5. The method of claim 1, wherein the plurality of augmentation components includes one or more of a filter, an intensity adjustment, a noise generator, or a style transfer.

6. The method of claim 1, wherein for each image patch of the plurality of image patches, the at least one augmentation component is selected on a random basis.

7. The method of claim 1, wherein for each image patch of the plurality of image patches, a parameter associated with the at least one augmentation component is selected on a random basis.

8. The method of claim 1, wherein for each image patch of the plurality of image patches, the at least one augmentation component is selected based on a predetermined queue.

9. The method of claim 1, wherein at least two image patches overlap within an image block, and wherein overlapping regions of the at least two image patches, as augmented, are blended together.

10. The method of claim 1, wherein the neural network is trained using a plurality of augmented training image blocks produced from a plurality of training image blocks, wherein for at least one augmented training image block at least two augmented image patches have different augmentation.

11. A computing system comprising:
a processor; and
a memory coupled to the processor, the memory comprising instructions which, when executed by the processor, cause the computing system to perform operations comprising:
dividing an image block into a plurality of image patches, each image patch having a size, a shape, and a location relative to the image block;
generating an augmented image block by applying a variable image augmentation to each image patch, wherein the variable image augmentation comprises at least one augmentation component selected from a plurality of augmentation components and at least two augmented image patches have different augmentation wherein for each image patch having a plurality of selected augmentation components, outputs for each of the selected augmentation components are blended to provide an augmented image patch; and
training a neural network using the plurality of augmented image blocks as training images.

12. The computing system of claim 11, wherein the instructions, when executed, cause the computing system to perform further operations comprising:
producing a plurality of augmented image blocks by repeating the dividing and generating operations on the image block, wherein each augmented image block has a unique combination of augmented image patches with respect to the other augmented image blocks;
performing an image analysis task including:
applying the neural network to each of the plurality of augmented image blocks to obtain a respective output of the neural network for each augmented image block; and
determining a result of the image processing task based on combining the respective outputs of the neural network.

13. The computing system of claim 11, wherein for each image patch of the plurality of image patches, one or more of the size, the shape or the location of a respective of image patch is selected on a random basis, and wherein the image patches collectively represent at least a threshold amount of the image block.

14. The computing system of claim 11, wherein the variable image augmentation comprises at least one augmentation component selected from a plurality of augmentation components, and wherein the plurality of augmentation components includes one or more of a filter, an intensity adjustment, a noise generator, or a style transfer.

## Patentansprüche

1. Computerimplementiertes Verfahren (700), umfassend:
Aufteilen eines Bildblocks in mehrere Bildausschnitte, wobei jeder Bildausschnitt eine Größe, eine Form und eine Position relativ zu dem Bildblock aufweist;
Generieren eines erweiterten Bildblocks durch Anwenden einer variablen Bilderweiterung auf jeden Bildausschnitt, wobei die variable Bilderweiterung mindestens eine Erweiterungskomponente umfasst, die aus mehreren Erweiterungskomponenten ausgewählt ist, und mindestens zwei erweiterte Bildausschnitte eine unterschiedliche Erweiterung aufweisen, wobei für jeden Bildausschnitt mit mehreren ausgewählten Erweiterungskomponenten Ausgaben für jede der ausgewählten Erweiterungskomponenten verschmolzen werden, um einen erweiterten Bildausschnitt bereitzustellen; und
Trainieren eines neuronalen Netzwerks unter Verwendung der mehreren erweiterten Bildblöcke als Trainingsbilder.

2. Verfahren nach Anspruch 1, ferner umfassend:
Erzeugen mehrerer erweiterter Bildblöcke durch Wiederholen der Aufteilungs- und Generierungsvorgänge an dem Bildblock, wobei jeder erweiterte Bildblock eine einzigartige Kombination aus erweiterten Bildausschnitten in Bezug auf die anderen erweiterten Bildblöcke aufweist;
Durchführen einer Bildanalyseaufgabe, die Folgendes beinhaltet:
Anwenden des neuronalen Netzwerks auf jeden der mehreren erweiterten Bildblöcke, um eine jeweilige Ausgabe des neuronalen Netzwerks für jeden erweiterten Bildblock zu erhalten; und
Bestimmen eines Ergebnisses der Bildverarbeitungsaufgabe basierend auf einem Kombinieren der jeweiligen Ausgaben des neuronalen Netzwerks.

3. Verfahren nach Anspruch 1, wobei für jeden Bildausschnitt der mehreren Bildausschnitte eines oder mehrere der Größe, der Form oder der Position eines jeweiligen Bildausschnitts auf zufälliger Basis ausgewählt werden.

4. Verfahren nach Anspruch 1, wobei die Bildausschnitte gemeinsam mindestens einen Schwellenbetrag des Bildblocks darstellen.

5. Verfahren nach Anspruch 1, wobei die mehreren Erweiterungskomponenten eines oder mehrere von einem Filter, einer Intensitätsanpassung, einem Rauschgenerator oder einer Stilübertragung beinhalten.

6. Verfahren nach Anspruch 1, wobei für jeden Bildausschnitt der mehreren Bildausschnitte die mindestens eine Erweiterungskomponente auf zufälliger Basis ausgewählt wird.

7. Verfahren nach Anspruch 1, wobei für jeden Bildausschnitt der mehreren Bildausschnitte ein Parameter, der mit der mindestens einen Erweiterungskomponente assoziiert ist, auf zufälliger Basis ausgewählt wird.

8. Verfahren nach Anspruch 1, wobei für jeden Bildausschnitt der mehreren Bildausschnitte die mindestens eine Erweiterungskomponente basierend auf einer vorbestimmten Warteschlange ausgewählt wird.

9. Verfahren nach Anspruch 1, wobei sich mindestens zwei Bildausschnitte innerhalb eines Bildblocks überlappen, und wobei sich überlappende Bereiche der mindestens zwei Bildausschnitte, die erweitert wurden, miteinander verschmolzen werden.

10. Verfahren nach Anspruch 1, wobei das neuronale Netzwerk unter Verwendung mehrerer erweiterter Trainingsbildblöcke trainiert wird, die aus mehreren Trainingsbildblöcken erzeugt werden, wobei für mindestens einen erweiterten Trainingsbildblock mindestens zwei erweiterte Bildausschnitte eine unterschiedliche Erweiterung aufweisen.

11. Rechensystem, umfassend:
einen Prozessor; und
einen Speicher, der mit dem Prozessor gekoppelt ist, wobei der Speicher Anweisungen umfasst, die, wenn sie durch den Prozessor ausgeführt werden, bewirken, dass das Rechensystem Operationen durchführt, die Folgendes umfassen:
Aufteilen eines Bildblocks in mehrere Bildausschnitte, wobei jeder Bildausschnitt eine Größe, eine Form und eine Position relativ zu dem Bildblock aufweist;
Generieren eines erweiterten Bildblocks durch Anwenden einer variablen Bilderweiterung auf jeden Bildausschnitt, wobei die variable Bilderweiterung mindestens eine Erweiterungskomponente umfasst, die aus mehreren Erweiterungskomponenten ausgewählt ist, und mindestens zwei erweiterte Bildausschnitte eine unterschiedliche Erweiterung aufweisen, wobei für jeden Bildausschnitt mit mehreren ausgewählten Erweiterungskomponenten Ausgaben für jede der ausgewählten Erweiterungskomponenten verschmolzen werden, um einen erweiterten Bildausschnitt bereitzustellen; und
Trainieren eines neuronalen Netzwerks unter Verwendung der mehreren erweiterten Bildblöcke als Trainingsbilder.

12. Rechensystem nach Anspruch 11, wobei die Anweisungen, wenn sie ausgeführt werden, bewirken, dass das Rechensystem weitere Operationen durchführt, die Folgendes umfassen:
Erzeugen mehrerer erweiterter Bildblöcke durch Wiederholen der Aufteilungs- und Generierungsvorgänge an dem Bildblock, wobei jeder erweiterte Bildblock eine einzigartige Kombination aus erweiterten Bildausschnitten in Bezug auf die anderen erweiterten Bildblöcke aufweist;
Durchführen einer Bildanalyseaufgabe, die Folgendes beinhaltet:
Anwenden des neuronalen Netzwerks auf jeden der mehreren erweiterten Bildblöcke, um eine jeweilige Ausgabe des neuronalen Netzwerks für jeden erweiterten Bildblock zu erhalten; und
Bestimmen eines Ergebnisses der Bildverarbeitungsaufgabe basierend auf einem Kombinieren der jeweiligen Ausgaben des neuronalen Netzwerks.

13. Rechensystem nach Anspruch 11, wobei für jeden Bildausschnitt der mehreren Bildausschnitte eines oder mehrere der Größe, der Form oder der Position eines jeweiligen Bildausschnitts auf zufälliger Basis ausgewählt werden, und wobei die Bildausschnitte gemeinsam mindestens einen Schwellenbetrag des Bildblocks darstellen.

14. Rechensystem nach Anspruch 11, wobei die variable Bilderweiterung mindestens eine Erweiterungskomponente umfasst, die aus mehreren Erweiterungskomponenten ausgewählt ist, und wobei die mehreren Erweiterungskomponenten eines oder mehrere von einem Filter, einer Intensitätsanpassung, einem Rauschgenerator oder einer Stilübertragung beinhalten.

## Revendications

1. Procédé (700) mis en œuvre par ordinateur comprenant les étapes suivantes :
diviser un bloc d'image en une pluralité de patchs d'image, chaque patch d'image ayant une taille, une forme et un emplacement par rapport au bloc d'image ;
générer un bloc d'image augmenté en appliquant une augmentation d'image variable à chaque patch d'image, où l'augmentation d'image variable comprend au moins un composant d'augmentation sélectionné parmi une pluralité de composants d'augmentation et au moins deux patchs d'image augmentés ont une augmentation différente, où, pour chaque patch d'image ayant une pluralité de composants d'augmentation sélectionnés, les sorties pour chacun des composants d'augmentation sélectionnés sont fusionnées pour fournir un patch d'image augmenté ; et
entraîner un réseau de neurones en utilisant la pluralité de blocs d'image augmentés comme images d'apprentissage.

2. Procédé selon la revendication 1, comprenant en outre les étapes suivantes :
produire une pluralité de blocs d'image augmentés en répétant les opérations de division et de génération sur le bloc d'image, où chaque bloc d'image augmenté possède une combinaison unique de patchs d'image augmentés par rapport aux autres blocs d'image augmentés ;
exécuter une tâche d'analyse d'image comprenant les étapes suivantes :
appliquer le réseau de neurones à chacun de la pluralité de blocs d'image augmentés pour obtenir une sortie respective du réseau de neurones pour chaque bloc d'image augmenté ; et
déterminer un résultat de la tâche de traitement d'image sur la base de la combinaison des sorties respectives du réseau de neurones.

3. Procédé selon la revendication 1, dans lequel, pour chaque patch d'image de la pluralité de patchs d'image, un ou plusieurs éléments parmi la taille, la forme ou l'emplacement d'un patch d'image respectif sont sélectionnés sur une base aléatoire.

4. Procédé selon la revendication 1, dans lequel les patchs d'image représentent collectivement au moins une quantité seuil du bloc d'image.

5. Procédé selon la revendication 1, dans lequel la pluralité de composants d'augmentation comprennent un ou plusieurs éléments parmi un filtre, un ajustement d'intensité, un générateur de bruit ou un transfert de style.

6. Procédé selon la revendication 1, dans lequel, pour chaque patch d'image de la pluralité de patchs d'image, l'au moins un composant d'augmentation est sélectionné sur une base aléatoire.

7. Procédé selon la revendication 1, dans lequel, pour chaque patch d'image de la pluralité de patchs d'image, un paramètre associé à l'au moins un composant d'augmentation est sélectionné sur une base aléatoire.

8. Procédé selon la revendication 1, dans lequel, pour chaque patch d'image de la pluralité de patchs d'image, l'au moins un composant d'augmentation est sélectionné sur la base d'une file d'attente prédéterminée.

9. Procédé selon la revendication 1, dans lequel au moins deux patchs d'image se chevauchent à l'intérieur d'un bloc d'image, et dans lequel des régions de chevauchement des au moins deux patchs d'image, tels qu'augmentés, sont fusionnées ensemble.

10. Procédé selon la revendication 1, dans lequel le réseau de neurones est entraîné en utilisant une pluralité de blocs d'image d'apprentissage augmentés produits à partir d'une pluralité de blocs d'image d'apprentissage, où, pour au moins un bloc d'image d'apprentissage augmenté, au moins deux patchs d'image augmentés ont une augmentation différente.

11. Système informatique comprenant :
un processeur ; et
une mémoire couplée au processeur, la mémoire comprenant des instructions qui, lorsqu'elles sont exécutées par le processeur, amènent le système informatique à exécuter des opérations comprenant les étapes suivantes :
diviser un bloc d'image en une pluralité de patchs d'image, chaque patch d'image ayant une taille, une forme et un emplacement par rapport au bloc d'image ;
générer un bloc d'image augmenté en appliquant une augmentation d'image variable à chaque patch d'image, où l'augmentation d'image variable comprend au moins un composant d'augmentation sélectionné parmi une pluralité de composants d'augmentation et au moins deux patchs d'image augmentés ont une augmentation différente, où, pour chaque patch d'image ayant une pluralité de composants d'augmentation sélectionnés, les sorties pour chacun des composants d'augmentation sélectionnés sont fusionnées pour fournir un patch d'image augmenté ; et
entraîner un réseau de neurones en utilisant la pluralité de blocs d'image augmentés comme images d'apprentissage.

12. Système informatique selon la revendication 11, dans lequel les instructions, lorsqu'elles sont exécutées, amènent le système informatique à exécuter d'autres opérations comprenant les étapes suivantes :
produire une pluralité de blocs d'image augmentés en répétant les opérations de division et de génération sur le bloc d'image, où chaque bloc d'image augmenté possède une combinaison unique de patchs d'image augmentés par rapport aux autres blocs d'image augmentés ;
exécuter une tâche d'analyse d'image comprenant les étapes suivantes :
appliquer le réseau de neurones à chacun de la pluralité de blocs d'image augmentés pour obtenir une sortie respective du réseau de neurones pour chaque bloc d'image augmenté ; et
déterminer un résultat de la tâche de traitement d'image sur la base de la combinaison des sorties respectives du réseau de neurones.

13. Système informatique selon la revendication 11, dans lequel, pour chaque patch d'image de la pluralité de patchs d'image, une ou plusieurs caractéristiques parmi la taille, la forme ou l'emplacement d'un patch d'image respectif sont sélectionnées sur une base aléatoire, et dans lequel les patchs d'image représentent collectivement au moins une quantité seuil du bloc d'image.

14. Système informatique selon la revendication 11, dans lequel l'augmentation d'image variable comprend au moins un composant d'augmentation sélectionné parmi une pluralité de composants d'augmentation, et dans lequel la pluralité de composants d'augmentation comprennent un ou plusieurs éléments parmi un filtre, un ajustement d'intensité, un générateur de bruit ou un transfert de style.
